(19)

Europäisches
Patentamt
European
Patent Office
Office européen
des brevets

(11)     **EP 4 312 354 A1**

(12)     **EUROPEAN PATENT APPLICATION**

(43) Date of publication:
**31.01.2024   Bulletin 2024/05**

(21) Application number: **22187455.5**

(22) Date of filing: **28.07.2022**

(51) International Patent Classification (IPC):
*H02M 1/00* (2006.01)       *H02M 1/12* (2006.01)
*H02M 1/42* (2007.01)       *H05B 45/355* (2020.01)

(52) Cooperative Patent Classification (CPC):
**H05B 45/355; H02M 1/0032; H02M 1/007;
H02M 1/008; H02M 1/12; H02M 1/4225**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tridonic GmbH & Co. KG
6851 Dornbirn (AT)**

(72) Inventor: **Netzer, Harald
6850 Dornbirn (AT)**

(74) Representative: **Beder, Jens
Mitscherlich PartmbB
Patent- und Rechtsanwälte
Karlstraße 7
80333 München (DE)**

(54)     **DEVICE AND METHOD FOR CONTROLLING AN OVERALL POWER FACTOR (PF) OF TWO OR MORE ELECTRONIC CIRCUITS AND LIGHTING SYSTEM**

(57)     The present invention provides a device for controlling an overall PF of two or more electronic circuits that are each configured to perform PFC during operation. The device may be electrically connected between mains and the electronic circuits such that the electronic circuits are electrically supplied from mains with a mains voltage and current via the device and the mains current is divided among the electronic circuits. The device may receive from each electronic circuit information on an electrical input power and/or output power of the respective electronic circuit. The device may generate, in response to determining the electrical input or output power of at least one electronic circuit being smaller than a respective threshold, a control signal causing a change of the PFC of the at least one electronic circuit for increasing the overall PF of the two or more electronic circuits.

Fig. 1

**Description**

The present invention relates to a device and method for controlling an overall power factor of two or more electronic circuits and to a lighting system. The terms "general" and "total" may be used as synonyms for the term "overall". That is, the present invention relates to a device and method for controlling a general/total power factor of two or more electronic circuits. The two or more electronic circuits may be two or more light emitting diode drivers (LED drivers). The term "LED gear" may be used as a synonym for the term "LED driver".

An electronic circuit, such as an LED driver, may be electrically supplied from mains with mains voltage and mains current. For this, it is desired that the electronic circuit has characteristics similar to a purely resistive load. In the case of sinusoidal waveforms at linear load, the phase shift φ between mains voltage and mains current (that is drawn from mains and, thus, flows into the electronic circuits) is zero. As a result, the power factor (PF) of the electronic circuit would be one (PF = 1), because for sinusoidal waveforms at a linear load the PF equals to the cosine of the phase shift φ between mains voltage and mains current (PF = cos(φ)). A linear load is e.g. a purely resistive load, where the current and the voltage waveforms are equal and there is a linear relationship between voltage and current. A high PF, ideally a PF of one (PF = 1), is desired, because companies and similar institutions may need to pay for reactive power (in contrast to private individuals that may only pay for real power).

Additionally, the total harmonic distortion (THDi) of the mains current would be zero (THDi = o) because the mains current would be completely sinusoidal with a frequency corresponding to the mains frequency (i.e. the mains current waveform would comprise only the fundamental oscillation without any higher order harmonics). Total harmonic distortion is closely related to the mains current harmonics - in ideal case it is desired that no higher order harmonics in the mains current are present. For both, THDi and harmonics of the mains current, there may be standards that guide maximum limits/requirements an electronic circuit is to comply with. Harmonic distortion of the mains current may be a problem because the distorted mains current flows through the whole power grid and leads to harmonic distortion of the mains voltage at some other place, where it may lead to malfunction of other electronic circuits.

In general, the power factor (PF) is the relation of the real/active power (P, in Watts, W) to the apparent power (|S|, in VA). If the PF is equal to one (PF = 1), there is only active power and no reactive power (Q, in var). If the PF is smaller than one (PF < 1) in addition to active power there is also reactive power. The PF may consists of two parts: the displacement power factor (which is caused by the phase shift φ between mains current and mains voltage) and the distortion power factor (which considers that the mains current is not purely sinusoidal, whereas the mains voltage usually is assumed to be purely sinusoidal).

Thus, power factor (PF) may be given by the following equation which considers the phase shift φ between mains current and mains voltage and the harmonic distortion of the mains current (THDi).

$$PF = \frac{cos\varphi}{\sqrt{1 + THD_i^2}}$$

Another issue related to PF, THDi and harmonics may be the current flowing through neutral of a three-phase electrical supply system. In a three-phase electrical supply system, the voltages on all three phases with respect to neutral are shifted by 120° from each other. If all loads are purely resistive and the load of each phase is similar the currents flowing on neutral may compensate each other, i.e. the net current flowing on neutral is zero. All phase shifts and harmonic distortions on the phase currents, as well as unbalanced load distribution, may lead to neutral currents higher than zero, potentially too high for the neutral wiring.

Multiple electronic circuits each configured for power factor correction (PFC) may be combined, such as two or more LED drivers for driving different groups of one or more LEDs. These multiple electronic circuits may be electrically supplied from mains. The above mentioned mains parameter of each electronic circuit, such as power factor (PF) of the respective electronic circuit, total harmonic distortion (THDi) of the mains current drawn by the respective electronic circuit and harmonics of the mains current drawn by the respective electronic circuit, may be optimized by proper design and control of the respective electronic circuit. That is, the circuit design and circuit control may be done on a single electronic circuit level, individually for each electronic circuit of the multiple electronic circuits. The aim may be to optimize the mains parameters at full load of the respective electronic circuit. For example, the aim may be to optimize the mains parameter at a full 50 W electrical output power of the electronic circuit in case of a 50 W electronic circuit. At states of less load, i.e. less electrical output power (e.g. below 25 W in case of a 50 W electronic circuit), different standards and regulations may apply so that the mains parameter requirements (low THDi, high PF, low higher order harmonics) are not so strict at lower electrical output power compared to high output power or at lower input (or mains) power compared to high input power.

For example, in case the multiple electronic circuits are two or more LED drivers, it is desired to optimize the mains parameters at full electrical output power, i.e. at rated output power (e.g. at full 50 W output power in case of LED drivers with a rated output power of 50 W). At a dimming operation of the LED drivers, e.g. below 25 W input power, different standards and regulation apply, so that the mains parameter requirements (low THDi, high PF, low higher order harmonics) are not so strict at lower input power (e.g. dimming operation below 25 W input power) compared to high input power (e.g. operation above 25 W input power or undimmed operation at 50 W output power and correspondingly e.g. 55W input power).

Due to the fact that the optimization of the multiple electronic circuits may be done at full (i.e. rated) electrical output power, a system (e.g. a lighting system, such as a luminaire) comprising for example five 50 W electronic circuits (e.g. five LED drivers each with rated output power of 50 W) running at full power (i.e. in total 250 W output power) may have better overall mains parameters (i.e. better general/total mains parameters) compared to a system comprising e.g. two 100 W electronic circuits each operating at 75 W output power and five 50 W electronic circuits each operating at 20 W (i.e. in total 250 W output power).

In the light of the above, it is an object of the present invention to improve at least one of the mains parameters (e.g. THDi, PF and higher order harmonics) when operating, using electrical energy from mains, multiple electronic circuits each configured for PFC. It may be an object to improve an overall power factor (PF) of multiple electronic circuits when operating, using electrical energy from mains, the multiple electronic circuits each configured for PFC.

These and other objects, which become apparent upon reading the following description, are solved by the subject-matter of the independent claim. The dependent claims refer to preferred embodiments of the invention.

According to a first aspect of the invention, a device for controlling an overall power factor (PF) of two or more electronic circuits that are each configured to perform a power factor correction (PFC) during operation is provided. Optionally, the two or more electronic circuits are two or more LED drivers. The device is configured to be electrically connected between mains and the two or more electronic circuits such that the two or more electronic circuits are electrically supplied from mains with a mains voltage and a mains current via the device and the mains current is divided among the two or more electronic circuits. The device is configured to receive, during the operation of the two or more electronic circuits, from each of the two or more electronic circuits information on an electrical input power and/or electrical output power of the respective electronic circuit. The device is configured to determine, during the operation of the two or more electronic circuits, a low power state, in which the electrical input power or electrical output power of at least one electronic circuit of the two or more electronic circuits is smaller than a respective threshold. The device is configured to generate, in response to determining the low power state, a control signal causing a change of the PFC of the at least one electronic circuit of the two or more electronic circuits for increasing the overall PF of the two or more electronic circuits.

In other words, the first aspects proposes a device for controlling an overall PF of two or more electronic circuits that are each configured to perform PFC during operation. The device may be electrically connected between mains and the electronic circuits such that the electronic circuits are electrically supplied from mains with a mains voltage and current via the device and the mains current is divided among the electronic circuits. The device may receive from each electronic circuit information on an electrical input power and/or output power of the respective electronic circuit. The device may generate, in response to determining the electrical input or output power of at least one electronic circuit being smaller than a respective threshold, a control signal causing a change of the PFC of the at least one electronic circuit for increasing the overall PF of the two or more electronic circuits.

Since at a low power state of the two or more electronic circuits, i.e. lower electrical input power or output power of at least one electronic circuit of the two or more electronic circuits, the requirements and regulations with regard to mains parameters are less strict compared to a high power state of the two or more electronic circuits, the PFC of the at least one electronic circuit may be changed for increasing the overall PF of the two or more electronic circuits. As a result, the device according to the first aspect allows improving at least one of the mains parameters (e.g. THDi, PF and higher order harmonics) when operating, using electrical energy from mains, the two or more electronic circuits. In the end, what counts for a customer are the overall / total mains parameters of his installation. The overall PF as well as the THD and harmonics of the total current (i.e. of the mains current) that is drawn by the two or more electronic circuits from mains is relevant. The current drawn from individual electronic circuits (or similar components of the installation) may be secondary.

The passage "multiple electronic circuits" may be used as a synonym for the passage "two or more electronic circuits". The term "trigger" may be used as a synonym for the term "cause". The term "electrically connect" may be abbreviated by the term "connect". The device may be referred to as "power analyzer".

In other words, the device is configured to change, in response to determining the low power state, the PFC of the at least one electronic circuit of the two or more electronic circuits for increasing the overall PF of the two or more electronic circuits. The control signal may be a command causing the change of the PFC of the at least one electronic circuit for increasing the overall PF of the two or more electronic circuits. The device may be configured to generate and transmit the control signal to the at least one electronic circuit.

The device may be the same electronic circuit as one of the two or more electronic circuits. The two or more electronic circuits may be the same type of electronic circuit or different types of electronic circuit. For example, the device and the two or more electronic circuits may each be an LED driver.

Optionally, the device and one electronic circuit of the two or more electronic circuits may form an entity. This entity and the one or more other electronic circuits of the two or more electronic circuits may each be an LED driver. In other words, the aforementioned entity (comprising the device and one electronic circuit of the two or more electronic circuits) may be an LED driver and the other electronic circuit (in case of two electronic circuits) or each of the other electronic circuits (in case of more than two electronic circuits) may be an LED driver. The entity being an LED driver may be a primary LED driver and the other electronic circuit (in case of two electronic circuits) or each of the other electronic circuits (in case of more than two electronic circuits) being an LED driver may be a secondary LED driver. The primary LED driver may be configured to control operation of the one or more secondary LED drivers. The primary LED driver may be at a higher control hierarch compared to the one or more secondary LED drivers.

The information on an electrical input power of the respective electronic circuit may comprise or be the value of the current drawn by the respective electronic circuit and/or the value of the voltage supplied to the respective electronic circuit. The information on an electrical input power of the respective electronic circuit may comprise or be the value of the electrical input power of the respective electronic circuit. The information on an electrical output power of the respective electronic circuit may comprise or be the value of a current provided by the respective electronic circuit at its output and/or the value of the voltage provided by the respective electronic circuit at its output. The information on an electrical output power of the respective electronic circuit may comprise or be the value of the electrical output power of the respective electronic circuit. In case of the electronic circuit being an LED driver or being part of an LED driver, the information on the electrical input power and/or the electrical output power may comprise or be the dimlevel of the LED driver (i.e. at which dimming state/level the LED driver is operating).

The device may be configured to measure or determine at least one of the mains parameters, such as PF, THDi and current harmonics.

The control signal may cause a change from a high power operation mode of the PFC of the at least one electronic circuit to a low power operation mode of the PFC of the at least one electronic circuit.

A high power operation mode of the PFC may be an operation mode that is adapted to fulfill one or more standards and/or regulations valid for the input power or the output power being equal to or greater than the respective threshold (e.g. valid for the rated output power). A low power operation mode may be an operation mode that is adapted to fulfill one or more standards and/or regulations valid for the input power or the output power being smaller than the respective threshold.

Optionally, the control signal causes a change of the PFC of the at least one electronic circuit by causing the at least one electronic circuit to change one or more parameters of a control of the current drawn by the at least one electronic circuit.

In this case, each electronic circuit of the two or more electronic circuits may be configured to perform the PFC by performing a control of the current drawn by the respective electronic circuit from the mains current. The control may be a loop-back/feedback control of the current drawn by the at least one electronic circuit.

Optionally, the control signal causes a change of the PFC of the at least one electronic circuit by increasing the on-time of a switch of a boost converter of the at least one electronic circuit in a vicinity of zero-crosses of the mains voltage.

In this case each electronic circuit of the two or more electronic circuits may comprise a boost converter and may be configured to perform the PFC by controlling a switch of the boost converter in borderline conduction mode (BCM) with a constant on-time of the switch.

Optionally, the device is configured to generate a control signal causing a reversion of the change of the PFC of the at least one electronic circuit in case the device determines that the change of the PFC of the at least one electronic circuit causes a decrease of the overall PF of the two or more electronic circuits.

Optionally, the device is configured to generate a control signal causing a reversion of the change of the PFC of the at least one electronic circuit in case the device determines that the electrical input power or electrical output power of the at least one electronic circuit is equal to or greater than the respective threshold.

The control signal (causing the reversion) may cause a change from a low power operation mode of the PFC of the at least one electronic circuit to a high power operation mode of the PFC of the at least one electronic circuit.

Optionally, the device is configured to generate a control signal causing a change of the PFC of each of a group of electronic circuits of the two or more electronic circuits, and to generate a control signal causing a reversion of the change of the PFC of each electronic circuit of the group of electronic circuits, for which electronic circuit the device determines that the change of the PFC causes a decrease of the overall PF of the two or more electronic circuits, in case in the low power state the electrical input power or electrical output power of each of the group of electronic circuits is smaller than the respective threshold.

In other words, the device may be configured to use multiple electronic circuits (of the two or more electronic circuits), each having an input power or output power smaller than the respective threshold, for improving the overall PF of the two or more electronic circuits.

The device may be configured to successively generate a control signal causing a change of the PFC of a respective electronic circuit of the group of electronic circuits such that, each time, the device generates the control signal causing the change of the PFC of the respective electronic circuit and checks whether the change of the PFC of the respective electronic circuit causes an increase or decrease of the overall PF of the two or more electronic circuits or not.

In other words, the device may be configured to successively change the PFC of each electronic circuit of the group of electronic circuits such that, each time, the device changes the PFC of an electronic circuit and checks whether the change of the PFC of the electronic circuit causes an increase or decrease of the overall PF of the two or more electronic circuits or not. That is, each time the device changes the PFC of an electronic circuit, the device may check or determine whether the change of the PFC of the electronic circuit causes an increase or decrease of the overall PF of the two or more electronic circuits or not.

Optionally, the device is configured to store information on the effect of the change of the PFC of each of the group of electronic circuits on the overall PF of the two or more electronic circuits. The device may be configured to use the information for deciding which of the group of electronic circuits to select for changing the respective PFC in a future low power state caused by at least the group of electronic circuits.

That is, the device may be configured to use the information for deciding which electronic circuit(s) of the group of electronic circuits to select for changing the respective PFC in a future low power state caused by at least the group of electronic circuits.

Optionally, the device is configured to receive, during the operation of the two or more electronic circuits, from each of the two or more electronic circuits information on a current drawn by the respective electronic circuit of the two or more electronic circuits from the mains current.

The device may use this information for identifying an operation state of the two or more electronic circuits.

Optionally, the device is configured to be electrically connected to a wired DALI bus and to communicate with the two or more electronic circuits via the wired DALI bus. That is, the device mays comprise an interface (e.g. DALI interface) configured to be connected to a wired DALI bus. Such an interface may be referred to as wired interface. In addition or alternatively, the device may comprise any other kind of wired interface and/or wireless interface. The device may be configured to communicate with an entity outside the device (e.g. the two or more electronic circuits) via the respective wired interface and/or to wirelessly communicate with an entity outside the device (e.g. the two or more electronic circuits) via the respective wireless interface.

The term DALI stands for "Digital Adressable Lighting Interface" and is a well-known standard in the field of lighting. The wired DALI bus may a wired bus according to DALI (DALI Edition 1) or according to DALI-2 (DALI Edition 2), which is the follow-up standard of DALI.

Optionally, the device is a primary electronic circuit; and the device is configured to be electrically connected with the two or more electronic circuits such that an input of each of the two or more electronic circuits is electrically connected to an output of the primary electronic circuit. The primary electronic circuit is optionally a primary LED driver.

For example, the primary electronic circuit may be a primary LED driver, and each of the two or more electronic circuits may be a secondary LED driver. The primary LED driver may be configured to control operation of the two or more secondary LED drivers. The primary LED driver may be at a higher control hierarch compared to the two or more secondary LED drivers.

In order to achieve the device according to the first aspect of the invention, some or all of the above described optional features may be combined with each other.

According to a second aspect of the invention a lighting system is provided. Optionally, the lighting system is a luminaire. The lighting system comprises the above described device according to the first aspect of the invention, and two or more electronic circuits that are each configured to perform a power factor correction (PFC) during operation. Optionally, the two or more electronic circuits are two or more LED drivers. The device is configured to be electrically connected between mains and the two or more electronic circuits such that the two or more electronic circuits are electrically supplied from mains with a mains voltage and a mains current via the device and the mains current is divided among the two or more electronic circuits.

Optionally, the device and one electronic circuit of the two or more electronic circuits may form an entity. This entity and the one or more other electronic circuits of the two or more electronic circuits may each be an LED driver. In other words, the aforementioned entity (comprising the device and one electronic circuit of the two or more electronic circuits) may be an LED driver and the other electronic circuit (in case of two electronic circuits) or each of the other electronic circuits (in case of more than two electronic circuits) may be an LED driver. The entity being an LED driver may be a primary LED driver and the other electronic circuit (in case of two electronic circuits) or each of the other electronic circuits (in case of more than two electronic circuits) being an LED driver may be a secondary LED driver. The primary LED driver may be configured to control operation of the one or more secondary LED drivers. The primary LED driver may be at a higher control hierarchy compared to the one or more secondary LED drivers.

Each of the two or more LED drivers may be configured to drive one or more LEDs. The two or more LED drivers may be configured to operate a different number of LEDs. The one or more LEDs drivable by the respective LED driver of the two or more LED drivers may be part of the lighting system.

The above description with regard to the device according to the first aspect of the invention is correspondingly valid for the lighting system according to the second aspect of the invention, in particular for the device and the two or more electronic circuits of the lighting system.

The lighting system according to the second aspect of the invention achieves the same advantages as the device according to the first aspect of the invention.

In order to achieve the lighting system according to the second aspect of the invention, some or all of the above described optional features may be combined with each other.

According to a third aspect of the invention, a method for controlling an overall power factor (PF) of two or more electronic circuits that are each configured to perform a power factor correction (PFC) during operation is provided. Optionally, the two or more electronic circuits are two or more LED drivers. The method comprises electrically supplying the two or more electronic circuits from mains with a mains voltage and a mains current, wherein the mains current is divided among the two or more electronic circuits. The method comprises receiving, during the operation of the two or more electronic circuits, from each of the two or more electronic circuits information on an electrical input power and/or electrical output power of the respective electronic circuit. The method comprises determining, during the operation of the two or more electronic circuits, a low power state, in which the electrical input power or electrical output power of at least one electronic circuit of the two or more electronic circuits is smaller than a respective threshold. The method comprises generating, in response to determining the low power state, a control signal causing a change of the PFC of the at least one electronic circuit of the two or more electronic circuits for increasing the overall PF of the two or more electronic circuits.

The above description with regard to the device according to the first aspect of the invention is correspondingly valid for the method according to the third aspect of the invention.

The method according to the third aspect of the invention achieves the same advantages as the device according to the first aspect of the invention.

In order to achieve the method according to the third aspect of the invention, some or all of the above described optional features may be combined with each other.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which

**Figure 1** schematically shows a circuit diagram of an example of a device and two or more electronic circuits according to an embodiment of the present invention;

**Figure 2** schematically shows a circuit diagram of an example of an LED driver according to an embodiment of the present invention;

**Figure 3** schematically shows a circuit diagram of an example of a part of an LED driver according to an embodiment of the present invention configured to perform a power factor correction (PFC);

**Figure 4** schematically shows an example of the current flow through the boost choke of the circuit of Figure 3 over time when PFC is performed; and

**Figures 5 and 6** each schematically show electrical parameters of the circuit of Figure 3 over time when PFC is performed according to an example.

In the Figures, corresponding elements have the same reference signs.

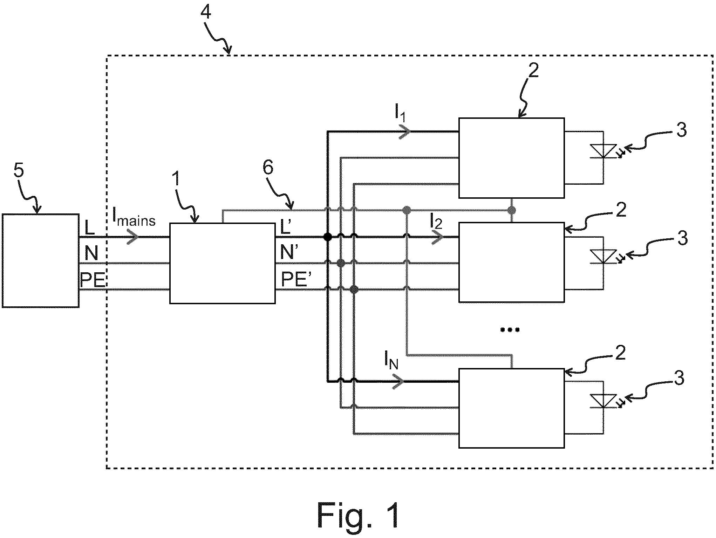

**Figure 1** schematically shows a circuit diagram of an example of a device and two or more electronic circuits according to an embodiment of the present invention. The device of Figure 1 is an example of the device according to the first aspect of the invention. The description of the device according to the first aspect is correspondingly valid for the device of Figure 1.

The device 1 of Figure 1 is a device for controlling an overall power factor (PF) of two or more electronic circuits 2 that are each configured to perform a power factor correction (PFC) during operation. According to Figure 1, three electronic circuits 2 are shown. This number is only by way of example and does not limit the present disclosure. The device 1 is configured to be electrically connected between mains 5 and the two or more electronic circuits 2 such that the two or more electronic circuits 2 are electrically supplied from mains 5 with a mains voltage and a mains current $I_{mains}$ via the device 1 and the mains current $I_{mains}$ is divided among the two or more electronic circuits 2. As shown in Figure 1, the mains current $I_{mains}$ may be divided into the three currents $I_1$, $I_2$ and $I_N$ for the three electronic circuits 2. That is, in case N is the number of electronic circuits 2, wherein N is equal to or greater than 2 ($N \geq 2$), then the mains

current $I_{mains}$ may be divided among the N electronic circuits 2, i.e. the mains current $I_{mains}$ may be divided in N currents for the N electronic circuits 2. The device 1 is configured to receive, during the operation of the two or more electronic circuits 2, from each of the two or more electronic circuits 2, information on an electrical input power and/or electrical output power of the respective electronic circuit.

The device 1 is configured to determine, during the operation of the two or more electronic circuits 2, a low power state, in which the electrical input power or electrical output power of at least one electronic circuit of the two or more electronic circuits 2 is smaller than a respective threshold. The device 1 is configured to generate, in response to determining the low power state, a control signal causing a change of the PFC of the at least one electronic circuit of the two or more electronic circuits 2 for increasing the overall PF of the two or more electronic circuits 2.

Mains 5 may correspond or be provided in form of a main building installation for electrical supply.

As indicated in Figure 1, the two or more electronic circuits 2 may be two or more LED drivers. Each LED driver 2 may be configured to drive one or more light emitting diodes 3 (LEDs). For the following description, it is assumed that the two or more electronic circuits 2 are two or more LED drivers. This is not limiting for the present disclosure and, thus, the following description is correspondingly valid in case the two or more electronic circuits are a different type of circuit. The following description is correspondingly valid for the optional case according to which the device 1 and one electronic circuit of the two or more electronic circuits 2 form an entity. Optionally, this entity and the one or more other electronic circuits of the two or more electronic circuits 2 each are an LED driver. In other words, the entity (comprising the device 1 and one of the two or more electronic circuits 2) and the one or more other electronic circuits of the two or more electronic circuits 2 may be two or more LED drivers.

As indicated in Figure 1, the device 1 may be configured to be electrically connected to a control interface 6 to which the two or more LED drivers 2 are electrically connected. The device 1 may be configured to transmit control signals to the two or more LED drivers 2 via the control interface 6. For example, the control interface 6 may be or may comprise a wired DALI bus. In other words, the device 1 may be configured to be electrically connected to a wired DALI bus 6 and to communicate with the two or more LED drivers 2 via the wired DALI bus 6. Alternatively or additionally, the device 1 may be configured to wirelessly communicate with the two or more LED drivers 2. The device 1 and the two or more LED drivers 2 may be configured to communicate (wirelessly and/or wire-bound) with a central control entity or utilizing a decentral mesh communication approach.

The two or more LED drivers 2 each may be configured to run or operate, based on control signals received from outside (e.g. from the device 1) and/or due to one or more sensor inputs, on its own dimming level (i.e. dimlevel), delivering a certain electrical output power and therefore drawing a certain current from the mains current $I_{mains}$.

As shown in Figure 1, an input of the device 1 may be connected to mains 5 via two wires, such as the phase wire L (L-line) and the neutral wire N (N-line). Optionally, the input of the device may be connected to mains via three wires, such as the phase wire L (L-line), the neutral wire N (N-line) and the protective earth wire PE (PE-line). The input of each of the two or more LED drivers 2 may be connected to the output of the device 1 via the phase wire L', the neutral wire N' and optionally the protective earth wire PE'. In other words, the LED drivers 2 may be connected to mains via the device 1 using two wires or three wires. This electrical connection between mains 5 and the device 1 and between the device 1 and the LED drivers 2 is not limiting the present disclosure and may be differently implemented.

As shown in Figure 1, the device 1 and the two or more LED driver 2 may form a lighting system 4. With other words, a lighting system 4 may be provided wherein the lighting system 4 comprises the device 1 and the two or more LED drivers 2 that are each configured to perform a PFC during operation. The lighting system 4 may comprise the LEDs 3 that may be driven by the two or more LED drivers 2. The LEDs 3 may be the light source of the lighting system 4. The lighting system 4 is an example of the lighting system of the second aspect. The description of the lighting system of the second aspect is correspondingly valid for the lighting system of Figure 1. As shown in Figure 1, the device 1 may be configured to be electrically connected between mains 5 and the two or more LED drivers 2 such that the two or more LED drivers 2 are electrically supplied from mains 5 with a mains voltage and a mains current $I_{mains}$ via the device 1 and the mains current $I_{mains}$ is divided among the two or more LED drivers 1. The lighting system 4 may be a luminaire.

Optionally, the device 1 is a primary LED driver; and the device 1 is configured to be electrically connected with the two or more LED drivers 2 such that an input of each of the two or more LED drivers 2 is electrically connected to an output of the primary LED driver.

Optionally, the device 1 and one electronic circuit of the two or more electronic circuits 2 (e.g. the electronic circuit provided with the current $I_2$) may form an entity (not shown in Figure 1). This entity and the one or more other electronic circuits of the two or more electronic circuits 2 may each be an LED driver. In other words, the aforementioned entity (comprising the device 1 and one electronic circuit of the two or more electronic circuits 2) may be an LED driver and the other electronic circuit (in case of two electronic circuits 2) or each of the other electronic circuits (in case of more than two electronic circuits 2) may be an LED driver. The entity being an LED driver may be a primary LED driver and the other electronic circuit (in case of two electronic circuits 2) or each of the other electronic circuits (in case of more than two electronic circuits 2) being an LED driver may be a secondary LED driver. The primary LED driver may be configured to control operation of the one or more secondary LED drivers. The primary LED driver may be at a higher control hierarch compared to the one or more secondary LED drivers. The description with regard to the two or more electronic circuits 2 each being an LED driver 2 is correspondingly valid for the optional case, in which the device 1 and one electronic circuit of the two or more electronic circuits 2 form an entity, wherein the entity and the other one or more electronic circuits 2 (of the two or more electronic circuits 2) are each an LED driver.

The device 1 (e.g. being a power analyzer, a primary LED driver or part of an LED driver, e.g. part of a primary LED driver) may know the electrical output power and/or electrical input power at which each LED driver 2 of the two or more LED drivers 2 is currently operating. For example, in case the control interface 6 is a wired DALI bus the device 1 may readout this information via a DALI interface from the wired DALI bus.

The device 1 may be configured to determine or measure at least one of the PF, the THDi and harmonics of the mains current $I_{mains}$ (i.e. the overall/total mains current provided by mains 5). In order to optimize e.g. the overall PF and/or THDi of the mains current $I_{mains}$, the device 1 may generate and transmit control signals to one or more LED drivers (of the two or more LED drivers 2), which operate below a threshold for the output power or input power. For example, this threshold may be equal to 25 W mains power. The threshold for the electrical output power or the threshold for the electrical input power may be chosen or set such that, in case the input power or output power of an individual LED driver 2 is smaller than the respective threshold, the individual LED 2 driver does not need to comply with certain regulations. For example, during operation of the individual LED driver 2 below the respective threshold more relaxed regulations apply compared to operation above the respective threshold.

The device 1 may generate and transmit a control signal to one or more LED drivers 2 (of the two or more LED drivers 2), whose input power or output power is smaller than the respective threshold, causing a change of the PFC of the one or more LED drivers for increasing (i.e. improving) the overall PF of the two or more LED drivers 2.

The device 1 may generate and transmit a control signal to one or more LED drivers 2 (of the two or more LED drivers 2), whose input power or output power is smaller than the respective threshold. The control signal may cause a change of the PFC of the one or more LED drivers 2 by causing the one or more LED drivers 2 to change one or more parameters of a control of the current drawn by the respective LED driver.

For example, each LED driver of the two or more LED drivers 2 may comprise a boost converter and may be configured to perform the PFC by controlling a switch of the boost converter in borderline conduction mode (BCM) with a constant on-time of the switch.

In this case, the control signal causes a change of the PFC of the at least one electronic circuit by increasing the on-time of the switch of a boost converter of the one or more LED driver 2 (running at lower powers) in a vicinity of zero-crosses of the mains voltage.

That is, the one or more LED drivers (running at lower powers and, thus ,receiving the control signal from the device 1) may adapt the control of their boost converter in order to (further) increase the on-time of the boost converter switch in the mains zero cross region. This may make the THDi / harmonics of the single LED driver of the one or more LED drivers 2 worse (e.g. as too much current may be drawn in the mains zero cross region), but the shape of the mains current $I_{mains}$ may be improved. This may lead to better overall mains parameters (e.g. to a better overall PF of the two or more LED drivers 2).

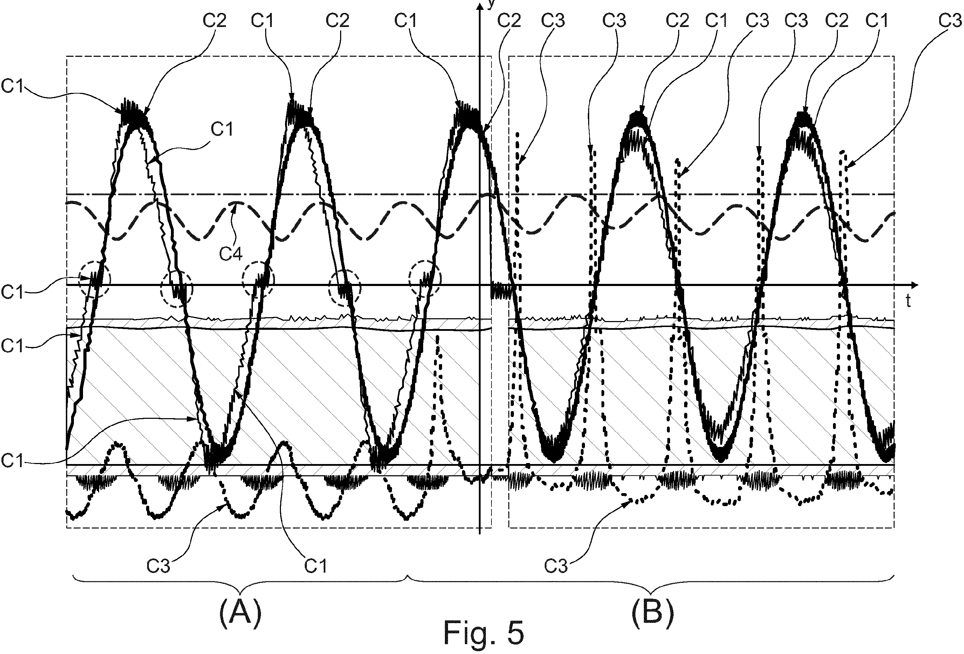

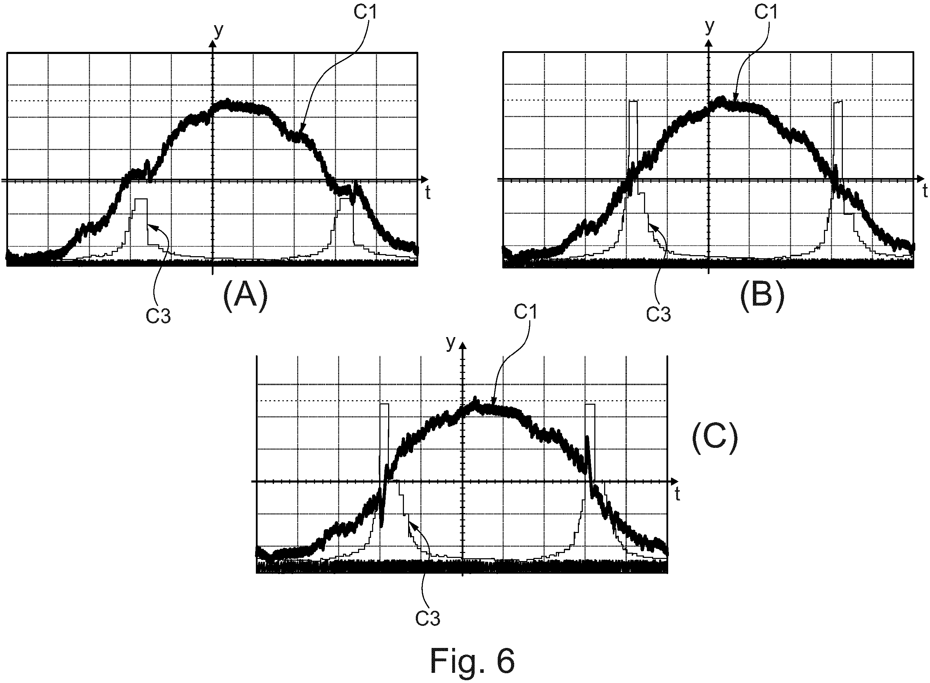

Increasing the on-time of the switch of the boost converter in the vicinity of (i.e. near) the zero-crosses of the mains voltage (i.e. in a range of the mains voltage zero-crosses) causes the current drawn by the respective LED driver from the mains current in the zero-crossing regions of the mains voltage to increase. That is, the current drawn by the respective LED driver from mains current in the zero-crossing regions of the mains voltage is increased. This leads to a more sinusoidal waveform of the current drawn from mains current (compared to the current drawn from mains current without increasing the on-time of the boost converter switch of the respective LED driver). As a result, the overall PF of the two or more LED drivers 2 may be improved (i.e. increased). Namely, the greater the PF (i.e. the closer the PF to 1) the better the PF. This is described in more detail with respect to Figures 5 and 6.

Optionally, the device 1 is configured to generate a control signal causing a reversion of the change of the PFC of the aforementioned one or more LED drivers 2 in case the device 1 determines that the electrical input power or electrical output power of the one or more LED drivers 2 is equal to or greater than the respective threshold.

For example, once such a low power LED driver 2 is dimmed up and its mains power (or output power) is greater than the respective threshold, the device 1 may determine this, and generate and transmit a control signal causing a reversion of the aforementioned change of the PFC of the LED driver 2. In response to receiving said control signal, the LED driver 2 may stop the (further) increase of the on-time of the boost converter and the LED driver 2 may operate normally again with regard to the PFC function. The overall mains parameters might get worse then again until the device 1 detects or determines one or more other LED drivers 2 running at low power. These one or more LED drivers 2 may modify its switching behavior, caused by a respective control signal from the device 1, in order to serve the overall mains parameters

Figure 1 shows an example of the lighting system 4 in form of a single-phase lighting installation comprising the device 1 and the two or more LED drivers 2. This is only by way of example and not limiting. For example, the lighting system 4 may be a multiphase lighting installation, such as a three-phase lighting installation.

For further information on the device 1 and the lighting system 4 of Figure 1, e.g. possible implementation forms of the function of the device 1, reference is made to the above description of the device according to the first aspect and the lighting system according to the second aspect of the invention.

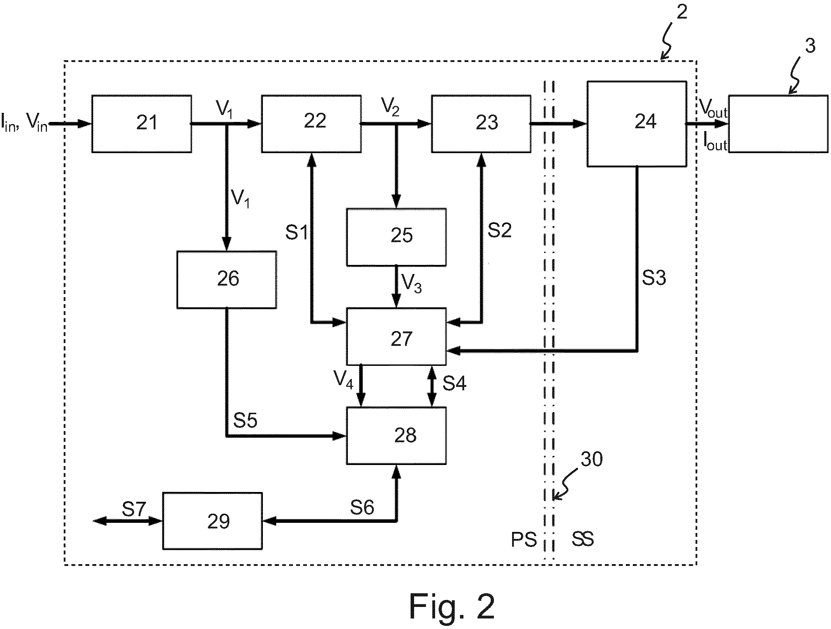

**Figure 2** schematically shows a circuit diagram of an example of an LED driver according to an embodiment of the present invention. The two or more LED drivers 2 of Figure 1 may be implemented as shown in Figure 2. Optionally, the device 1 of Figure 1 may be an LED driver according to Figure 2.

As shown in Figure 2, the LED driver 2 may comprise a rectifier and filter circuit 21. The rectifier and filter circuit 21 may comprise a rectifier and an EMI filter. An input current $I_{in}$ (e.g. AC current) and input voltage $V_{in}$ (e.g. AC voltage) may be provided via the input of the LED driver 2 to the rectifier and filter circuit 21. The input voltage $V_{in}$ may be mains voltage. The LED driver 2 may be configured to filter and rectify the input voltage $V_{in}$ (using the rectifier and filter circuit 21). The LED driver 2 may comprise a first DC-to-DC converter stage 22 and a second DC-to-DC converter stage 23. The first DC-to-DC converter stage is a PFC stage (i.e. it is configured to perform a PFC) and may be implemented in the form of a boost converter (i.e. it may comprise a boost converter). The second DC-to-DC converter stage 23 may be an output stage. It may be a buck converter, a flyback converter, a resonant converter (e.g. half-bridge LCC or LLC converter) or any other converter type. The term "power converter" may be used as a synonym for the term "converter". Optionally, the LED driver may comprise one or more further converter stages in addition to the second DC-to-DC converter stage 23. The converter stages of the LED driver 2 are actively switched DC-to-DC converter stages. The rectified voltage $V_1$ (provided by the rectifier and filter circuit 21) may be provided to the first DC-to-DC converter stage 22.

The boost converter of the first DC-to-DC converter stage 22 may be controlled in order that the current drawn from mains is more or less sinusoidal and that its output voltage $V_2$ is stable. The output voltage $V_2$ of the boost converter 22 may be a constant DC voltage, referred to as bus voltage, which may be for example 400 V. Optionally, the first DC-to-DC converter stage 22 performing PFC may be configured to vary its output voltage $V_2$. Optionally, the first DC-to-DC converter stage 22 may be differently implemented. The boost converter 22 may be controlled in order to improve the PF and THDi of the LED driver 2.

The bus voltage $V_2$ may be provided to the second DC-to-DC converter stage 2. As indicated in Figure 2, the second DC-to-DC converter stage 2 may be a galvanically isolated converter stage providing a galvanic isolation 30 (e.g. galvanically isolated half-bridge LCC or LLC converter). The galvanic isolation 30 may divide the LED driver 2 in a primary side PS and a secondary side SS.

The LED driver 2 may comprise a rectifier circuit 24 for rectifying the output voltage of the second DC-to-DC converter stage 23. The resulting output voltage $V_{out}$ and output current $I_{out}$ may be provided by the LED driver 2 via its output to an LED load 3 (e.g. one or more LEDs) that may be connected to the output of the LED driver 2. The current flowing through the LED load 3 (i.e. the output current $I_{out}$) as well as the LED load voltage (i.e. the output voltage $V_{out}$) may be sensed and fed back ($S_3$) to an application specific integrated circuit 27 (ASIC) of the LED driver 2. In addition or alternatively, the sensed current flowing through the LED load 3 and the sensed LED load voltage may be fed back to a microcontroller 28 of the LED driver 2 (not shown in Figure 2). If the control of the first DC-to-DC converter stage 22 (i.e. the PFC) and the second DC-to-DC converter stage 23 is done by discrete hardware (and not by an integrated circuit), the sensed current flowing through the LED load 3 and the sensed LED load voltage may be fed back to a hardware block for such a control (not shown in Figure 2). Optionally, the LED driver 2 may comprise a further (utility) DC-to-DC converter stage 25 which may generate a low supply voltage $V_3$ (e.g. DC voltage of 12 V) from the bus voltage $V_2$ for electrically supplying the ASIC 27. That is the further DC-to-DC converter stage 25 may be a low voltage power supply (LVPS) stage (e.g. 12 V LVPS). The further DC-to-DC converter stage 25 may be implemented by a buck converter.

The ASIC 27 may comprise an internal linear regulator which is configured to deliver a voltage supply $V_4$ (e.g. a DC voltage of 3.3 V) to the microcontroller 28 of the LED driver 2. The ASIC 27 may be configured to control (S1, S2) operation of the first DC-to-DC converter stage 22 (i.e. the PFC) and the second DC-to-DC converter stage 23 (i.e. the current and voltage for driving the LED load 3). The ASIC 27 may control the further DC-to-DC converter stage 25. Optionally, the ASIC 25 may be configured (S4) by the microcontroller 28 via either SPI or I2C (or any other interface). The microcontroller 28 may be configured to communicate (S6) with the outside of the LED driver 2 via a control interface 29 that may be electrically connected (S7) to a wired DALI bus. In an example, the microcontroller 28 may be configured to sense (S5) the input voltage (e.g. mains voltage). For this, the LED driver 2 may comprise a mains voltage monitoring circuit 26. For example, the microcontroller 28 may be configured to determine, whether the input voltage $V_{in}$ is an AC or a DC voltage, to measure mains frequency and amplitude, etc. The LED driver 2 may comprise means for sensing the input voltage (e.g. mains voltage). The means for sensing the input voltage (e.g. mains voltage) may provide the sensed input voltage (e.g. sensed mains voltage) to the microcontroller 28.

The LED driver 2 is not limited to a control circuit formed by the ASIC 27 and the microcontroller 28. The LED driver 2 optionally does not comprise the microcontroller 28 and the functions of the microcontroller 28 may be performed by the ASIC 27. Alternatively, the LED driver 2 optionally does not comprise the ASIC 27 and the functions of the ASIC 27 may be performed by the microcontroller 28. In addition or alternatively, the LED driver 2 may comprise at least one other type of control means for controlling the functions of the LED driver 2.

The LED drivers 2 of the present disclosure are not limited to the LED driver 2 of Figure 2 and may be differently implemented (assuming that they may perform PFC during operation).

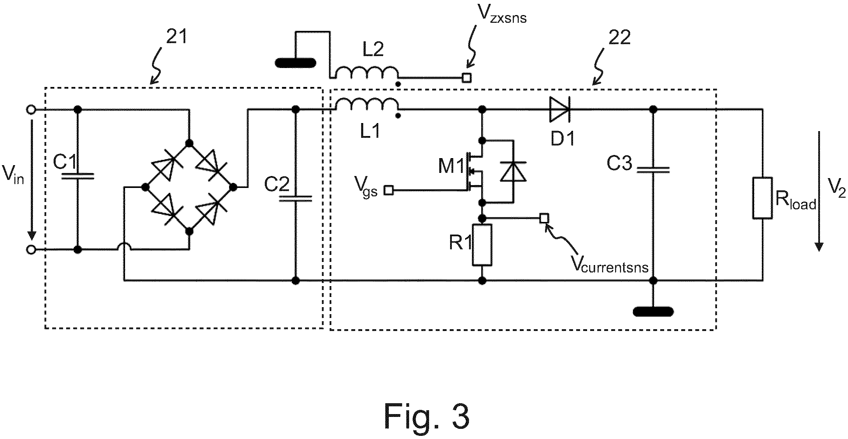

**Figure 3** schematically shows a circuit diagram of an example of a part of an LED driver according to an embodiment of the present invention configured to perform a power factor correction (PFC).

Figure 3 exemplarily shows the above mentioned boost converter 22 of the first DC-to-DC converter stage 22 and the rectifier and filter circuit 21 of the LED driver 2 of Figure 2. The rectifier and filter circuit 21 comprises a bridge rectifier (implemented by four diodes) and a filter implemented by two capacitors C1 and C2. In addition or alternatively, the filter may comprise other electronic components such as one or more inductors etc. (not shown in Figure 3). The input voltage $V_{in}$ (e.g. mains voltage) provided to the rectifier and filter circuit 21 may be rectified by the bridge rectifier and filtered by the two capacitors C1 and C2. The rectified (and filtered) input voltage $V_{in}$ (e.g. rectified and filtered mains voltage) serves as the input voltage of the boost converter 22 (i.e. the boost PFC circuit).

The boost converter 22 may provide at its output a constant output voltage $V_2$, which may be for example a DC voltage of 400 V. The boost converter 22 may comprise a boost choke Li (which may have a sense winding L2 that may be used to detect the zero crossing of the current through the choke in the form of a voltage $V_{zxsns}$), a switch M1, a diode Di and an output voltage buffer capacitor C3. As shown in Figure 3, the switch M1 may be a metal-oxide-semiconductor field-effect transistor (MOSFET), which may have an inherent internal body diode. The switch M1 may be implemented differently, e.g. by a different transistor. A sense resistor Ri (e.g. shunt) may be present in the boost converter for sensing the current flowing through the switch M1 in the form of a sense voltage Vcurrentsns.

The load that is connected to the boost converter 22 is represented by a simple resistor $R_{load}$. In the LED driver 2 of Figure 2, the load is the second DC-to-DC converter stage 23 (e.g. a half-bridge LCC/LLC converter). In a real LED driver 2, this load $R_{load}$ changes (e.g. when the dimlevel is changed).

The boost converter 22 may be controlled (e.g. by the ASIC 27 of the LED driver 2) in order to reach a sinusoidal (average) input current (i.e. the current drawn from mains) and a constant output voltage. According to an example, this is done by driving the boost converter in borderline conduction mode (BCM) with a constant on-time of the switch M1. In this mode the boost converter 22 may be controlled as follows: The boost converter switch M1 may be turned on (to the conducting state) for a constant on-time (i.e. fixed on-time). The on-time of the switch M1 may be determined by a control loop (e.g. PI controller) of the ASIC 27 that controls the output voltage $V_2$ of the boost converter. If much current is drawn at the output of the boost converter 22 the on-time of the switch M1 is to be high and if less current is drawn at the output the on-time is to be lower. For example, in case of a high dimlevel (i.e. the LED load 3 is to emit a high light intensity) a greater current is drawn from the bus voltage $V_2$ providable by the boost converter 22. In case of a low dimlevel (i.e. the LED load is to emit a low light intensity) a smaller current is drawn from the bus voltage $V_2$ providable by the boost converter 22. Therefore, the on-time of the switch M1 may be determined by the ASIC 27 relatively slow and it may remain constant over a mains period. During the on-time of the switch M1 (during its conducting state), energy is stored in the boost choke Li and, thus, the current flowing through the boost choke Li increases.

When the switch M1 is turned off (to the non-conducting state) after the constant on-time, the boost choke Li delivers energy to the output of the boost converter 22. As a result, during the off-time of the switch M1 the current through the boost choke Li decreases linearly. Once the current through the boost choke Li reaches zero Amperes, the switch M1 is turned on again.

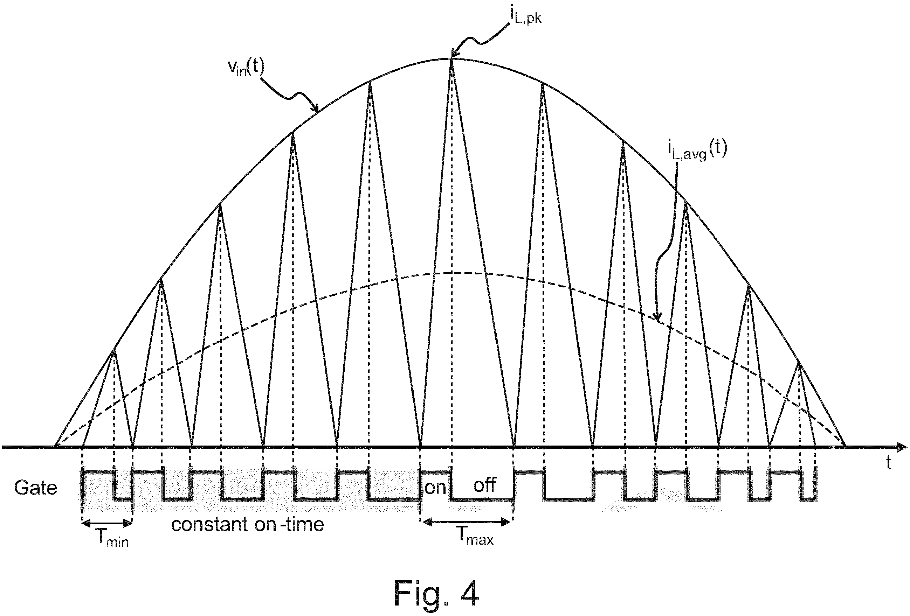

**Figure 4** schematically shows an example of the current flow through the boost choke of the circuit of Figure 3 over time when PFC is performed.

On the bottom of Figure 4, the drive signal that drives the switch M1 is indicated (labeled with "Gate") over the time t. As shown, the on-time of the drive signal is constant over a mains (half) period. That is, the on-time may be increased or decreased quite slowly (by the ASIC 27), depending on the load at the output of the boost converter 22. The input voltage $V_{in}$ of the boost converter 22 (e.g. rectified and filtered mains voltage $V_1$ supplied by the rectifier and filter circuit 21 to the boost converter 22) is labeled in Figure 4 as $V_{in}(t)$. As the input voltage has a sinusoidal shape, the peak currents $i_{L,pk}$ (the envelope of the peak currents) through the boost choke Li also have a sinusoidal shape. This is due to the aforementioned constant on-time and the relationship:

$$v(t) = L \cdot \frac{dI}{dt}$$

When in the above equation, "dt" (the constant on-time) and "L" (inductance of boost choke Li) is constant and v(t) changes sinusoidal, then also "dI" changes sinusoidally. Since the current always starts rising from zero in the BCM (the boost converter 22 is driven in BCM) "dI" may equal to the peak currents $i_{L,pk}$ through the boost choke Li so that the peak current $i_{L,pk}$ change sinusoidally. Due to the triangular waveforms, wherein the average current $i_{L,avg}$ through the boost choke Li equals to half the respective peak current $i_{L,pk}$ through the boost choke Li ($i_{L,avg} = i_{L,Pk}/2$), the average current $i_{L,avg}$ through the boost choke Li is also sinusoidal.

The sinusoidal current shown in Figure 4 is the average current $i_{L,avg}$ through the boost choke L1 and not one to one (1:1) the current drawn from mains (i.e. from the mains current). As may be derived from Figure 3, a current is only drawn by the boost converter 22 via the input of the LED driver (e.g. from the mains current), when the input voltage $V_{in}$ (e.g. the mains voltage) is greater than the rectified and filtered voltage (labelled "$V_1$" in Figure 2). Otherwise, the rectifier diodes do not conduct. Near the zero-crosses of the mains voltage, the capacitor C2 buffers the voltage. As a result, the voltage across the capacitor C2 (which is the input voltage of the boost converter 22) will probably not go to zero Volts at all, especially at low output powers). This means that in these time periods (i.e. near the zero-crosses of the mains voltage) no current is drawn from mains.

**Figures 5 and 6** each schematically show electrical parameters of the circuit of Figure 3 over time when PFC is performed according to an example.

**Figure 5** shows exemplary waveforms from a measurement when operating the boost converter of Figure 3 for performing the PFC. It is assumed that the input current $I_{in}$ and the input voltage $V_{in}$ are a current drawn from mains current and mains voltage, respectively. The horizontal axis (x-axis) indicates the time t. The vertical axis (y-axis) indicates for the curve C1 the current drawn from the mains current, for the curve C2 the mains voltage, for the curve C3 the on-time of the switch M1 of the boost converter 22 and for the curve C4 the output voltage $V_2$ of the boost converter.

On the left side of the plot (corresponding to part (A) of Figure 5), it can be seen that the current drawn from the mains current (cf. curve C1) remains zero around the zero-crosses of the mains voltage (cf. curve C2). These plateaus (highlighted in Figure 5 by dashed circles) lead to a bad THDi, i.e. a THDi greater than zero (THDi > 0), because the current drawn from the mains current does not comprise only the fundamental frequency but also comprises higher order harmonics, as it is not purely sinusoidal. Further, these plateaus lead to a bad PF, i.e. a PF smaller than one (PF < 1). It can be seen from Figure 5, that on the left side of the plot (corresponding to part (A) of Figure 5), the on-times of the boost converter switch M1 are quite constant (cf. curve C3), except a ripple which has the double mains frequency (because of the full wave rectifier shown in Figure 3). This is because the controller (e.g. PI controller) that controls the output voltage $V_2$ (cf. curve C4) is assumed to be quite fast for the example of Figure 5. That is, for the example of Figure 5, it is assumed that the on-time of the boost converter switch M1 is not constant over a (half) mains period. That is, the controller (e.g. PI controller), which may set the on-time of the boost converter switch M1 based on the sensed output voltage $V_2$ (i.e. sensed bus voltage), slightly varies the on-time of the boost converter switch M1 in part (A) of Figure 5.

On the right side of the plot (corresponding to part (B) of Figure 5) the effects of increasing the on-time of the boost converter switch M1 in a vicinity of zero-crosses of the mains voltage may be seen. That is, the on-time of the switch M1 is increased in areas near the mains zero crosses (cf. curve C3). This leads to the current drawn from the mains current being more sinusoidal (cf. curve C1), i.e. the plateaus almost vanish, which results in a better THDi and a better PF. The way how the on-times are increased near the mains zero crosses may be defined during the design of the respective LED driver 2. An optimization with regard thereto may be done for the rated output power of the respective LED driver 2.

**Figure 6** shows the curve C1 (i.e. the current drawn from the mains current) and the curve C3 (i.e. the on-time of the boost converter switch M1) for three different examples of increasing the on-time of the boost converter switch M1 near zero-crosses of the mains voltage.

Figure 6 (A) shows the current drawn, by a respective LED driver, from mains current in case the on-time of the switch of the boost converter PFC stage of the respective LED driver is not increased near zero-crosses of the mains voltage or is increased by a too small amount. The amount by which the on-time of the boost converter switch is increased may be determined by a controller (e.g. PI controller) controlling the output voltage (e.g. bus voltage) of the boost converter PFC stage (e.g. voltage $V_2$ provided by the first DC-to-DC converter stage 22 of the LED driver 2 of Figure 3).

Figure 6 (B) shows the current drawn, by the respective LED driver, from mains current in case the on-time of the boost converter switch M1 is increased such that THD correction and PFC are performed well. In this case, the amount, by which the on-time of the boost converter switch M1 is increased, is optimized (e.g. at the rated output power of the LED driver). That means at other output powers (i.e. other dimlevels), the waveform C1 will not look as good as the waveform C1 shown in Figure 6(B).

Figure 6 (C) shows the current drawn, by the respective LED driver, from mains current in case the amount, by which the on-time of the boost converter switch M1 is increased, is higher than the optimized amount (e.g. optimized at the rated output power of the LED driver). From Figure 6 (C), it may be derived that the waveform C1 differs slightly from being sinusoidal (compared to the "perfect" shape of Figure 6 (B)). In addition, it may be derived from Figure 6 (C) that the current near the zero-crosses is increased. This waveform of the current drawn from mains current will lead to a worse THD and PF of the respective LED driver (i.e. the single LED driver on its own) compared to the case of Figure 6 (B). However, it may be used to improve the overall mains current waveform of multiple LED drivers, such as the two or more LED drivers 2 of Figure 1, and thus the overall PF of the multiple LED drivers.

For example, in the two or more LED drivers 2 (e.g. the lighting system 4) of Figure 1, there may be one or more LED drivers drawing a current from the mains current $I_{mains}$ shaped like the curve C1 shown in Figure 6 (A) (i.e. with plateaus in the mains zero-crosses region). Then operating one or more other LED drivers such that they draw a current from the mains current $I_{mains}$ shaped like the curve C1 shown in Figure 6 (C) may improve the mains current $I_{mains}$ (equaling to the sum of all the currents drawn by the two or more LED drivers 2). That is, this may lead to the mains current $I_{mains}$ looking like the ideal case shown by the curve C1 of Figure 6 (B). As a result, this allows improving the overall PF of the two or more LED drivers 2 (while taking in account that the PF of one or more single LED drivers of the two or more LED drivers 2 worsen).

Therefore, the device 1 of Figure 1 may be configured to generate a control signal causing a change of the PFC of each of a group of LED drivers of the two or more LED drivers 2, and to generate a control signal causing a reversion of the change of the PFC of each LED driver (of the group of LED drivers), for which the device 1 determines that the change of the PFC causes a decrease of the overall PF of the two or more LED drivers 2. The device 1 may perform this, in case the electrical input power or electrical output power of each of the group of LED drivers is smaller than the respective threshold. Namely, this ensures that a worsening of the PF of a single LED driver of the group of LED drivers due to changing the PFC of the respective LED driver has a negligible effect on the operation of the single LED driver. In case of the electrical input power or output power of the respective LED driver being smaller than the respective threshold less strict regulations may apply for the PF of the respective LED driver.

The device may be configured to successively generate a control signal causing a change of the PFC of a respective LED driver of the group of LED drivers such that, each time, the device generates the control signal causing the change of the PFC of the respective LED driver and checks whether the change of the PFC of the respective LED driver causes an increase or decrease of the overall PF of the two or more LED drivers 2 or not.

Optionally, the device 1 may store information on the effect of the change of the PFC of each of the group of LED drivers on the overall PF of the two or more LED drivers 2. The device may be configured to use the information for deciding which LED driver(s) of the group of LED drivers 2 to select for changing the respective PFC in a future low power state caused by at least the group of LED drivers 2.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1.    A device (1) for controlling an overall power factor, PF, of two or more electronic circuits (2), optionally two or more LED drivers, that are each configured to perform a power factor correction, PFC, during operation, wherein

- the device (1) is configured to be electrically connected between mains (5) and the two or more electronic circuits (2) such that the two or more electronic circuits (2) are electrically supplied from mains (5) with a mains voltage and a mains current ($I_{mains}$) via the device (1) and the mains current ($I_{mains}$) is divided among the two or more electronic circuits (2);
- the device (1) is configured to receive, during the operation of the two or more electronic circuits (2), from each of the two or more electronic circuits (2) information on an electrical input power and/or electrical output power of the respective electronic circuit; and
- the device (1) is configured to

- determine, during the operation of the two or more electronic circuits (2), a low power state, in which the electrical input power or electrical output power of at least one electronic circuit of the two or more electronic circuits (2) is smaller than a respective threshold, and
- generate, in response to determining the low power state, a control signal causing a change of the PFC of the at least one electronic circuit of the two or more electronic circuits (2) for increasing the overall PF of the two or more electronic circuits (2).

2.    The device (1) according to claim 1, wherein

- the control signal causes a change from a high power operation mode of the PFC of the at least one electronic circuit to a low power operation mode of the PFC of the at least one electronic circuit.

3.    The device (1) according to claim 1 or 2, wherein

- the control signal causes a change of the PFC of the at least one electronic circuit by causing the at least one electronic circuit to change one or more parameters of a control of the current ($I_1$, $I_2$, $I_N$) drawn by the at least one electronic circuit.

4. The device (1) according to any one of the previous claims, wherein

   - the control signal causes a change of the PFC of the at least one electronic circuit by increasing the on-time of a switch of a boost converter of the at least one electronic circuit in a vicinity of zero-crosses of the mains voltage.

5. The device (1) according to any one of the previous claims, wherein

   - the device (1) is configured to generate a control signal causing a reversion of the change of the PFC of the at least one electronic circuit in case the device (1) determines that the change of the PFC of the at least one electronic circuit causes a decrease of the overall PF of the two or more electronic circuits (2).

6. The device (1) according to any one of the previous claims, wherein

   - the device (1) is configured to generate a control signal causing a reversion of the change of the PFC of the at least one electronic circuit in case the device (1) determines that the electrical input power or electrical output power of the at least one electronic circuit is equal to or greater than the respective threshold.

7. The device (1) according to claim 5 or 6, wherein

   - the control signal causes a change from a low power operation mode of the PFC of the at least one electronic circuit to a high power operation mode of the PFC of the at least one electronic circuit.

8. The device (1) according to any one of the previous claims, wherein

   - the device is configured to

      - generate a control signal causing a change of the PFC of each of a group of electronic circuits of the two or more electronic circuits (2), and
      - generate a control signal causing a reversion of the change of the PFC of each electronic circuit of the group of electronic circuits, for which electronic circuit the device (1) determines that the change of the PFC causes a decrease of the overall PF of the two or more electronic circuits (2),

   in case in the low power state the electrical input power or electrical output power of each of the group of electronic circuits is smaller than the respective threshold.

9. The device (1) according to claim 8, wherein

   - the device (1) is configured to successively generate a control signal causing a change of the PFC of a respective electronic circuit of the group of electronic circuits such that, each time, the device (1) generates the control signal causing the change of the PFC of the respective electronic circuit and checks whether the change of the PFC of the respective electronic circuit causes an increase or decrease of the overall PF of the two or more electronic circuits (2) or not.

10. The device (1) according to claim 8 or 9, wherein the device is configured to

    - store information on the effect of the change of the PFC of each of the group of electronic circuits on the overall PF of the two or more electronic circuits (2), and
    - use the information for deciding which of the group of electronic circuits to select for changing the respective PFC in a future low power state caused by at least the group of electronic circuits.

11. The device (1) according to any one of the previous claims, wherein

    - the device (1) is configured to receive, during the operation of the two or more electronic circuits (2), from each of the two or more electronic circuits (2) information on a current ($I_1$, $I_2$, $I_N$) drawn by the respective electronic circuit of the two or more electronic circuits (2) from the mains current ($I_{mains}$).

12. The device (1) according to any one of the previous claims, wherein

    - the device (1) is configured to be electrically connected to a wired DALI bus (6) and to communicate with the two or more electronic circuits (2) via the wired DALI bus (6).

13. The device (1) according to any one of the previous claims, wherein

- the device (1) is a primary electronic circuit, optionally primary LED driver; and
- the device (1) is configured to be electrically connected with the two or more electronic circuits (2) such that an input of each of the two or more electronic circuits (2) is electrically connected to an output of the primary electronic circuit (1).

14. A lighting system (4), optionally luminaire, wherein

   - the lighting system (4) comprises
   - the device (1) according to any one of the previous claims, and
   - two or more electronic circuits (2), optionally two or more LED drivers, that are each configured to perform a power factor correction, PFC, during operation; and
   - the device (1) is configured to be electrically connected between mains (5) and the two or more electronic circuits (2) such that the two or more electronic circuits (2) are electrically supplied from mains (5) with a mains voltage and a mains current ($I_{mains}$) via the device (1) and the mains current ($I_{mains}$) is divided among the two or more electronic circuits (2).

15. Method for controlling an overall power factor, PF, of two or more electronic circuits (2), optionally two or more LED drivers, that are each configured to perform a power factor correction, PFC, during operation, wherein the method comprises

   - electrically supplying the two or more electronic circuits (2) from mains (5) with a mains voltage and a mains current ($I_{mains}$), wherein the mains current ($I_{mains}$) is divided among the two or more electronic circuits (2);
   - receiving, during the operation of the two or more electronic circuits (2), from each of the two or more electronic circuits (2) information on an electrical input power and/or electrical output power of the respective electronic circuit;
   - determining, during the operation of the two or more electronic circuits (2), a low power state, in which the electrical input power or electrical output power of at least one electronic circuit of the two or more electronic circuits (2) is smaller than a respective threshold, and
   - generating, in response to determining the low power state, a control signal causing a change of the PFC of the at least one electronic circuit of the two or more electronic circuits (2) for increasing the overall PF of the two or more electronic circuits (2).

Fig. 1

Fig. 2

Fig. 3

Fig. 4

18

Fig. 5

Fig. 6

Europäisches
Patentamt

European
Patent Office

Office européen
des brevets

# EUROPEAN SEARCH REPORT

Application Number

EP 22 18 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/389957 A1 (MAJI GOUTAM [NL] ET AL) 10 December 2020 (2020-12-10) | 1-3,5-15 | INV. H02M1/00 |
| Y | * figures 2-3 *<br>* paragraph [0046] *<br>* paragraph [0087] – paragraph [0108] *<br>* paragraph [0121] – paragraph [0126] *<br>----- | 4 | H02M1/12<br>H02M1/42<br>H05B45/355 |
| Y | JEN-CHIEH TSAI ET AL: "Perturbation on-time (POT) control and inhibit time control (ITC) in suppression of THD of power factor correction (PFC) design", CUSTOM INTEGRATED CIRCUITS CONFERENCE (CICC), 2011 IEEE, IEEE, 19 September 2011 (2011-09-19), pages 1-4, XP032063787, DOI: 10.1109/CICC.2011.6055339 ISBN: 978-1-4577-0222-8 | 4 | |
| A | * figures 2-4 *<br>* page 2, column 1 *<br>----- | 1-3,5-15 | |
| A | US 10 050 443 B1 (ABDEL-RAHMAN OSAMA [US]) 14 August 2018 (2018-08-14) * figure 6 *<br>----- | 1-15 | TECHNICAL FIELDS SEARCHED (IPC)<br><br>H02M<br>H05B |

The present search report has been drawn up for all claims

| Place of search | Date of completion of the search | Examiner |
|---|---|---|
| The Hague | 9 January 2023 | Riehl, Philippe |

EPO FORM 1503 03.82 (P04C01)

## ANNEX TO THE EUROPEAN SEARCH REPORT
## ON EUROPEAN PATENT APPLICATION NO.

EP 22 18 7455

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2023

| Patent document cited in search report | | Publication date | Patent family member(s) | | Publication date |
|---|---|---|---|---|---|
| US 2020389957 | A1 | 10-12-2020 | CN | 111566896 A | 21-08-2020 |
| | | | EP | 3735730 A1 | 11-11-2020 |
| | | | JP | 2021508933 A | 11-03-2021 |
| | | | US | 2020389957 A1 | 10-12-2020 |
| | | | WO | 2019134801 A1 | 11-07-2019 |
| US 10050443 | B1 | 14-08-2018 | CN | 109412402 A | 01-03-2019 |
| | | | US | 10050443 B1 | 14-08-2018 |

EPO FORM P0459

For more details about this annex : see Official Journal of the European Patent Office, No. 12/82